# EUROPEAN PATENT APPLICATION

(11) **EP 1 903 001 A2**
(43) Date of publication of application: **26.03.2008**
(21) Application number: 07116687.0
(22) Date of filing: 18.09.2007
(51) Int. Cl.: C01B 3/38, C01B 3/48

(54) **Method and Apparatus for Syngas Production**

(30) Priority: 19.09.2006 US 523360
(71) Applicant: THE BOC GROUP, INC., New Providence, NJ 07974-2082 (US)
(72) Inventor: JIANG, Weibin, Clinton, NJ 08809 (US); TAMHANKAR, Satish, Scotch Plains, NJ 07076 (US)
(74) Representative: Wickham, Michael

(57) **Abstract**

A method for the catalytic partial oxidation of hydrocarbons to produce hydrogen and carbon monoxide is performed in which hydrocarbon and oxygen are reacted in a first stage reactor which contains a first upstream catalytic layer of a noble or transition metal catalyst on a first inert carrier support and a second layer of a reduced metal catalyst supported on or in a stable inorganic metal oxide washcoat on a second support. The resulting gas mixture containing hydrogen and carbon monoxide is reacted in a second stage reactor which is a shift reactor, further hydrogen thereby being formed.

## Description

This invention relates to a method of and apparatus for the partial oxidation of hydrocarbons.

The conversion of hydrocarbons to hydrogen and carbon monoxide containing gases is well known in the art. Examples of such processes include catalytic steam reforming, auto-thermal catalytic reforming, catalytic partial oxidation and non-catalytic partial oxidation. Each of these processes has advantages and disadvantages and produces various ratios of hydrogen and carbon monoxide, also known as synthesis gas (or syngas). The present invention is directed to a catalytic partial oxidation method and apparatus.

Partial oxidation processes are also well known and the art is replete with various catalytic partial oxidation processes. Partial oxidation is an exothermic reaction wherein a hydrocarbon gas, such as methane, and an oxygen-containing gas, such as air, is contacted with a catalyst at elevated temperatures to produce a reaction product containing high concentrations of hydrogen and carbon monoxide. The catalysts used in these processes are typically noble metals, such as platinum or rhodium, and other transition metals, such as nickel, all on a suitable support.

A partial oxidation processes converts hydrocarbon-containing gases, such as natural gas to hydrogen, carbon monoxide and other trace components such as carbon dioxide and water. The process is typically carried out by injecting preheated hydrocarbons and an oxygen-containing gas into a combustion chamber where oxidation of the hydrocarbons occurs with less than the stoichiometric amounts of oxygen required for complete combustion. This reaction takes place at very high temperatures, for example, in excess of 700°C and often in excess of 1,000°C, and pressures up to 150 atmospheres. In some processes, steam or carbon dioxide can also be injected into the combustion chamber to modify the synthesis gas product and to adjust the ratio of hydrogen to carbon monoxide.

More recently, partial oxidation processes have been disclosed in which the hydrocarbon gas is contacted with the oxygen-containing gas at high space velocities in the presence of a catalyst such as a metal deposited on a ceramic monolith (e.g. foam or honeycomb) support. The monolith supports are impregnated with a noble metal such as platinum, palladium or rhodium, or other transition metals such as nickel, cobalt, chromium and the like. Typically, these monolith supports are prepared from solid refractory or ceramic materials such as alumina, zirconia, magnesia and the like. During operation of these reactions, the hydrocarbon feed gases and oxygen-containing gases are initially contacted with the metal catalyst at temperatures in excess of 400°C, typically in excess of600°C, and at a standard gas hourly space velocity (GHSV) of over 100,000 per hour.

The partial oxidation of methane and other hydrocarbons is exothermic and under ideal conditions can proceed according to the stoichiometry of equation 1 to yield a syngas mixture with an H₂:CO ratio of 2:1 and equilibrium temperature less than 1100°C.

CH₄ + 1/2 O₂ → CO + 2 H₂ (1)

US 2003/0198592 A1 discloses multiple serially aligned reaction zones and multiple hydrocarbon feeds for converting a hydrocarbon and oxygen feed stream to syngas. The first reaction zone catalyzes the net partial oxidation of the feed hydrocarbon and the subsequent zone catalyzes either a water-gas shift reaction, net partial oxidation, steam or dry reforming. Some of the most selective catalysts, such as Rh, are not able to withstand the heat and retain their activity due to problems such as sintering and a limited tolerance to carbon formation. The method according to US 2003/0198592 A1 provides an advantage inasmuch as it places more of a thermally stable catalyst, such as a mixed metal oxide or a stable crystalline structure such as a spinel or perovskite, more preferably CoCrOxide, at the front of the reactor and most preferably 9.9 wt% Co_{0.2}Cr_{0.8}Oxide / 1 wt% Rh/6.1 wt% Yb supported on a refractory support such as alumina or zirconia, preferably partially stabilized zirconia (PSZ).

US 2003/0083198 A1 teaches a fixed bed catalyst system for use in the production of syngas by partial oxidation comprising first and second zones disposed in stacked serial flow arrangement in order to achieve better flow distribution, where first zone (upstream section) has a greater resistance to flow of the feed stream than second zone (down stream section)

It has been suggested that in a catalytic partial oxidation bed, that the partial oxidation occurs in the first few millimetres of bed length. See Hickman and Schmidt, Syngas Gas Formation by Direct Oxidation of Methane Over Pt Monoliths, 138 J. Catalysis 267, 275 (1992). Therefore it is logically thought that only a small portion of the catalyst bed is needed to catalyze the partial oxidation reaction.

However we have discovered that the actual temperature in the first few millimetres of the catalyst during a catalytic partial oxidation is much higher than expected. It has been found that nearly complete oxygen conversion is achieved in the first few millimetres of the catalyst and reaction performance improves when the length of the catalyst bed is increased.

Based on the above observations, it appears that direct partial oxidation is a combined effect of combustion, partial oxidation, steam and CO₂ reforming and water gas shift reaction. In the front of the reaction zone where feed gas contacts catalyst first, possibly only in the first few millimetres, oxidation reactions such as combustion, shown in equation 2, and partial oxidation, as in equation 1, compete with each other, leading to almost complete oxygen conversion.

CH₄ + 2 O₂ → CO₂ + 2 H₂O (2)

Heat released by the exothermic oxidation reaction provides enough energy to further convert the unreacted hydrocarbon species with steam or CO₂ produced from combustion reaction to syngas, through endothermic steam and CO₂ reforming reactions (3) and (4) together with some water-gas shift or reverse water-gas shift reactions (5).

CH₄ + H₂ → CO + 3H₂ (3)

CH₄ + CO₂ → 2CO2 + 2 H₂ (4)

H₂O +CO → CO₂ + H₂ (5)

This explains the excess amount of heat at the front of the reaction zone, of more than 1450°C, causing extreme high temperature in the front layer. The endothermic nature of the reforming reactions (3) and (4) rapidly cools the subsequent catalyst to less than 1100°C. As a result, the catalyst zone temperature is extremely high in the front layer followed by lower temperatures downstream.

It has been found that the most suitable fixed arrangement for the catalyst for use in the catalytic partial oxidation of hydrocarbons under conditions which would be commercially attractive is one in which the catalyst is retained in the form of reticulate monolithic structure. Catalysts for use in such a process comprise one or more catalytically active components supported on a refractory oxide carrier, the carrier being in the form of a reticulate monolith.

A significant problem can arise in the operation of partial oxidation processes when using a reticulate monolithic catalyst at such high temperatures of more than 1450°C, namely we have discovered that reticulate monolith supports, such as those made of partially stabilized zirconia (PSZ) or Al₂O₃, are very susceptible to high temperatures and thermal shock, and ultimately lead to catalyst instability and brittleness after reaction. There are several potential reasons that explain the embrittlement of the reticulate monolith: its hollow web-type structure is inherently weak at high temperature, and in the case of PSZ material a phase transition takes place, and so on. However, when the reaction temperature is controlled at less than 1100°C, reticulate monolith supports such as partially stabilized zirconia (PSZ) or Al₂O₃ can maintain their mechanical strength and give excellent reaction performance.

In summary, it has now been found that problems can occur in the operation of the partial oxidation process when using a reticulate monolithic catalyst. In particular, it has been found that the refractory monolithic catalyst structures are very susceptible to thermal shock and high temperature prevailing in the catalytic partial oxidation process, causing brittleness of the structure and ultimately leading to catalyst disintegration, especially when using oxygen rather than air.

According to the present invention there is provided a method for the partial oxidation of hydrocarbons to produce hydrogen and carbon monoxide by contacting with a mixture of a hydrocarbon-containing feed gas and an oxygen-containing gas a two stage reactor comprising a first stage reactor which comprises a first upstream catalytic layer of a catalytically active metal dispersed on a first inert carrier support and a second downstream catalytic layer of a reduced metal catalyst consisting essentially of a transition metal supported on or in a stable inorganic metal oxide washcoat on a second support, and a second stage reactor comprising a shift reactor.

The invention also provides apparatus for the partial oxidation of hydrocarbons to produce hydrogen and carbon monoxide by contacting with a mixture of a hydrocarbon-containing feed gas and an oxygen-containing gas comprising a first stage reactor which comprises a first upstream catalytic layer of a catalytically active metal dispersed on a first inert carrier support and a second downstream catalytic layer of a reduced metal catalyst consisting essentially of a transition metal support on or in a stable inorganic metal oxide washcoat on a second support, and a second stage reactor comprising a shift reactor.

The shift reactor may employ a catalyst which may be a (conventional) shift catalyst or a suitable catalytic monolith. The catalytic monolith can be a metal catalyst consisting essentially of a metal supported by a ceria coating disposed on a ceramic monolith, wherein the metal is selected from at least one of nickel, cobalt, iron, platinum, palladium, iridium, rhenium, ruthenium, rhodium and osmium, the ceramic is selected from at least one of zirconia, alumina, yttria, titania, magnesia, ceria and cordierite; and the ceria coating has a weight percent between about 5% and about 30% with respect to the ceramic monolith. In one embodiment, the ceramic is selected from at least one of zirconia, yttria, titania, magnesia, ceria and cordierite. The catalytic monolith may in general be in accordance with those disclosed in US patent application SN 10/143705 (published on 9 January 2003 as US 2003/0007926 A1. In a preferred example of the catalytic monolith, a zirconium monolith is coated by about 1 to 20 weight percent of ceria, which supports 0.5 to 5 weight percent rhodium on the ceria-coated monolith.

The shift catalyst in the second reactor can alternatively be a low temperature shift catalyst or water gas shift reactor catalyst.

The hydrocarbons that are employed in the feed gas are typically alkanes having from 1 to about 4 carbon atoms. Most preferably, the hydrocarbon is selected from the group consisting of natural gas and methane.

The metal catalyst monolith ceramic may be as disclosed in co-pending application serial number 10/143,705 published 9 January 2003 as US 2003/0007926 A1 to Jiang et al.

In a preferred embodiment of the catalytic monolith, a zirconium monolith is coated by about 1 to 20 weight percent of ceria which supports 0.5 to 5 weight percent rhodium on the ceria-coated monolith.

The preferred first inert carrier supports for use in the first layer at the feed side are particulates including spheres, pellets and rings; wagonwheels, Saint-Gobain Norpro's Ty-Pak®, HexPak™, Snowflake® media, and Norton® saddles, gauze wire, honeycomb monoliths or any other suitable supports in any acceptable manufactured shapes such as those listed herein, although reticulated monoliths with improved mechanical strength can also be used. This mechanical strength can be illustrated for purposes of the present invention as "crush strength" which is the maximum stress that a material can sustain under crush loading. The crush loading is that weight and/or pressure that will fracture or compact the catalyst substrate. The preferred first inert carrier supports for use in the present invention will have a crush strength that can withstand the typical operating conditions of a partial oxidation process of hydrocarbons. Accordingly the preferred first inert carrier supports for use in of the present invention will not lose crush strength during the normal operation of a partial oxidation process for hydrocarbons. The layered catalysts at the product side may catalyze the partial oxidation, but mainly promote reforming and water-gas shift reactions to achieve high level of carbon conversion with high syngas selectivity. The reticulated monoliths are more suitable for these subsequent layers, particularly as the last layer.

When more than two catalytic layers are used in the first stage reactor, they can be layered in any order provided the first layer is more stable to thermal shock and higher temperatures in excess of 1100°C and the subsequent layers can further catalyze the subsequent conversion to syngas. The pore structure of monoliths and the particle size of particulates are such that there is no significant pressure drop through the bed. Contrary to the teaching in US 2003/0083198 A1, in the current invention, the first layer (upstream) can be less flow resistant than the second layer by using a larger pore size honeycomb rather than a reticulate monolith. A catalytically inactive substrate may be placed between each of the catalyst layers to improve the gas distribution.

Protection of a downstream second catalytic layer in the form of a reticulated monolith catalyst either from active metal sintering or mechanical strength weakening at high temperatures can be achieved by shielding it from the high temperature using the first layer as the combustion catalyst. The direction of gas flow may be downwards and the catalyst layers may be supported on a blank support. The catalyst layers in the first reactor may be contiguous.

### First Catalyst Layer

The first layer catalyst desirably should be able to operate in an oxidizing and reducing environment effectively without significant deactivation over a temperature rangefrom about 1000°C to about 1800°C. The metal(s) used in the first catalyst layer are selected from certain transition and noble metals of the Periodic Table of Elements. Active metals can be selected from the group consisting of transition or noble metals selected from the group of nickel, cobalt, iron, platinum, palladium, iridium, rhenium, ruthenium, rhodium and osmium and combinations thereof. Preferred metals are nickel and rhodium.

The most preferred metal of this group for use as the catalytically active metal in the first layer is rhodium. The metals may be present on the first support in the form of metals, metal oxides, metal halides or other metal salts prior to being reduced. Upon reduction, as described below, the metals are substantially in the metallic form. Generally, from about 0.1 % to 8% by weight of the metal will be deposited on the support. Alternatively, Rh/Pt gauze catalyst can be used as the catalytically active metal in the first layer.

In the method according to the present invention, the exothermic reaction is almost complete instantaneously after contacting the first catalyst layer. The primary function of subsequent layer is to effect the endothermic reforming reaction. The "net partial oxidation" catalyst zone is considered as the two layers comprising a combustion catalyst and an endothermic catalyst. It is important to point out that PSZ reticulate material is not preferred as the first inert carrier support due to the inherent phase transition at high temperature. However, Rh coating on a first inert carrier support Al₂O₃ is stable even after more than 7 months of continuous operation as the first layer. It retains its catalytic activity as well as its mechanical strength.

A preferred form of first inert carrier support is made of a refractory, substantially inert, rigid material which is capable of maintaining its shape with sufficient degree of mechanical strength at high temperatures. Typically, a material is selected for the support, which exhibits a low thermal coefficient of expansion, good thermal shock resistance and high melting point. For example, cordierite material is not suitable as the front layer support for pure oxygen-based partial oxidation due to its lower melting point around 1450°C.

Several general types of material for construction of such carriers are known. Honeycomb monolithic supports are commercially available in various sizes and configuration. A suitable shape and size of pellet or granule type catalyst can also be purchased commercially. Both types of support structures are made from conventional refractory or ceramic materials selected from the group consisting of alumina, mullite, zirconia, partially stabilized zirconia, ceria, silica, silicon carbide, silicon nitride, Sialon™ (a silicon nitride ceramic with a small percentage of aluminium oxide added), aluminium nitride, boron nitride, aluminosilicate, magnesium aluminosilicates, and mixtures of these. Carriers can be formed by any suitable process, including molding, pressing, extruding, spray drying or die stamping, and so on. Inert support also includes metal monolith, prepared as metal foam or sintered particles of metal at high temperature. The most preferred support is a stabilized alumina, silicon carbide or partially stabilized zirconia in the form of honeycomb, sphere, pellet, ring, wagonwheel, Saint-Gobain Norpro's Ty-Pak®, HexPak™, Snowflake® media and Norton® saddles or granule. Preferably the surface area of support is relatively low ranging from between about 0.1 and about 50 m²/g.

### Subsequent Catalyst Layer

The second catalyst layer is desirably able to operate in oxidizing and reducing environments effectively without significant deactivation when used over a temperature range below about 1100°C. The reduced metal catalyst for use in the second catalytic layer may be on endothermic reaction catalyst. The second support for use in the second catalytic layer is preferably composed primarily of partially stabilized zirconia washcoated preferably with cerium oxide and impregnated with a noble or transition metal or combinations thereof. The active metals used in the second catalytic layer is a transition or noble metal selected preferably from the group of nickel, cobalt, iron, platinum, palladium, iridium, rhenium, ruthenium, rhodium and osmium and combinations thereof. Preferably the active metal is rhodium and/or nickel.

The zirconia or other second support is preferably a monolith, that is generally a ceramic foam-like or porous structure formed from a single structural unit having passages disposed in either an irregular or regular pattern with spacing between adjacent passages. Preferred are the ceramic foam structures having irregular passages. The support structures are typically made from conventional refractory or ceramic materials selected from the group consisting of alumina, mullite, zirconia, partially stabilized zirconia, ceria, silica, silicon carbide, silicon nitride, Sialon™, a silicon nitride ceramic with a small percentage of aluminium oxide added, aluminium nitride or boron nitride, aluminosilicate, magnesium aluminosilicates, and mixtures of these. A metal monolith prepared as a metal foam can alternatively be used as the second support. The most preferred second supports are partially stabilized zirconia or silicon carbide.

The washcoating of the second support provides a high surface area for improved overall catalyst effectiveness and activity. A typical process for washcoating the second support with inorganic metal oxide comprises contacting the second support with a metal oxide precursor, preferably maintaining the precursor coated second support at conditions to equilibrate the coating, and then oxidizing the precursor to form a substrate containing metal oxide. It is preferred to have macropores by adding decomposable organic matter to the washcoat and then decomposing it at high temperatures in an oxidizing atmosphere.

The stable high surface area inorganic oxides that can be washcoated are selected from but are not limited to oxides comprising one or more cations selected from groups IA, IIA, IIIA and IVA of the Periodic Table of the Elements and the transition metals, preferably from groups IA, IIA, IIIA, IIIB, IVA, IVB and the lanthanides, more preferably from ceria, aluminium, lanthanum, zirconium and barium and mixtures of these. The foam may be impregnated with more than one inorganic oxide simultaneously or sequentially.

Suitably the impregnating medium is in the form of an aqueous or organic solution, slurry, sol, gel, suspension or dispersion of inorganic oxide(s) particles, preferably of a sol of colloidal inorganic oxide(s) particles. The precursors of these washcoats are in any form that can be decomposed to an oxide by thermal decomposition. A stabilizing agent such as an oxide of alkaline or rare earth oxide may be added to the washcoat to prevent the sintering of washcoat during the reaction or pretreatment.

The second support may take the form of a ceramic foam monolith, a honeycomb monolith, or a metal monolith. The most preferred second support is a partially stabilized zirconia foam monolith washcoated with about 5% to about 30% by weight of an inorganic metal oxide, most preferably cerum.

To perform the method according to the invention, a mixture of a hydrocarbon-containing feed gas and an oxygen-containing feed gas is reacted in the first stage and second stage reactor preferably, at a pressure between 1 and 20 atmospheres, a feed gas standard gas hourly space velocity of about 5,000 to about 500,000 per hour, and a linear velocity of about 0.2 to about 50.0 meter per second *(mls).* In addition, the feed gas mixture may also comprise steam and/or CO₂. The two stages of the reactor apparatus preferably operates at different temperatures with the first stage operating at about 800°C to about 100°C and the second stage operating at about 250°C to about 600°C. The reactant gas mixture may be preheated to a temperature of about 10°C to about 450°C.

The method and apparatus according to the present invention will now be described by way of example with reference to the accompanying drawings in which:
Figure 1 is a schematic flow diagram of a first plant integrated two stage reactor for use in the method according to the present invention;
Figure 2 is a schematic flow diagram of a second plant including a two stage reactor for use in the method according to the present invention; and
Figure 3 is a schematic flow diagram of a third plant including a two stage reactor for use in the method according to the present invention.

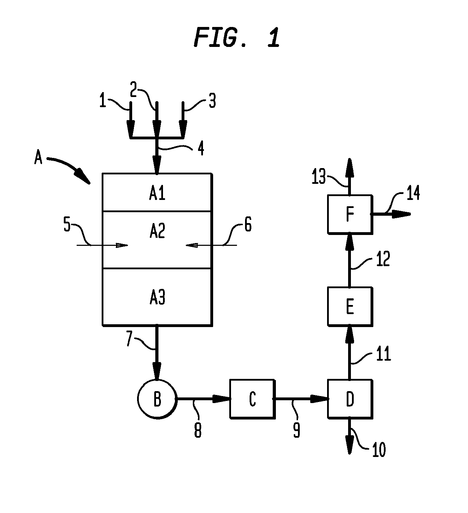

Referring to the drawings, in Figure 1 lines 1, 2, and 3 allow for the feed, respectively, of steam, natural gas, and oxygen and enter through line 4 into an integrated two stage reactor A. The first stage comprises layers A1 and A2 of catalytic material. The second stage comprises a layer A3 of catalytic material. The layers A1 and A2 effect partial oxidation of the hydrocarbon gas described hereinabove so as to form a gas mixture containing hydrogen and carbon monoxide, but also some carbon dioxide and water vapour. The gas that passes out of the first stage A1 is subjected to water and steam quenching in layer A, the water entering through line 5 and the steam through line 6. The now quenched gas stream continues on into layer or section A3 which is a shift reactor in which a water shift reaction takes place to form further hydrogen. The resulting gas mixture exits the two stage reactor through line 7 and enters a cooling unit B. The introduction of the water and steam into the reactor enables by adjusting the steam to carbon ratio to be optimised. The now cooled product stream exits from the cooling unit B through line 8 to a further low temperature shift reactor C. The resulting gas stream exits through line 9 to a condensing unit D where water present in the product gas stream will condense out. The essentially water free gas stream then travels through line 11 through a compression unit E, and then through line 12 to a separation unit F. The separation unit F may be a pressure swing adsorption system or a membrane system and this unit F will separate out the hydrogen product which exits through line 13. The remainder of the gas exits through line 14 and consists primarily of carbon monoxide.

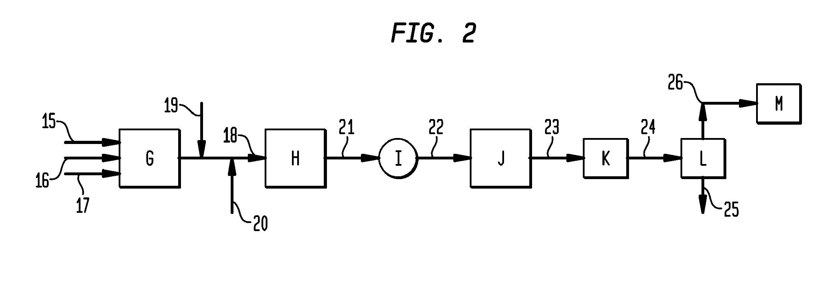

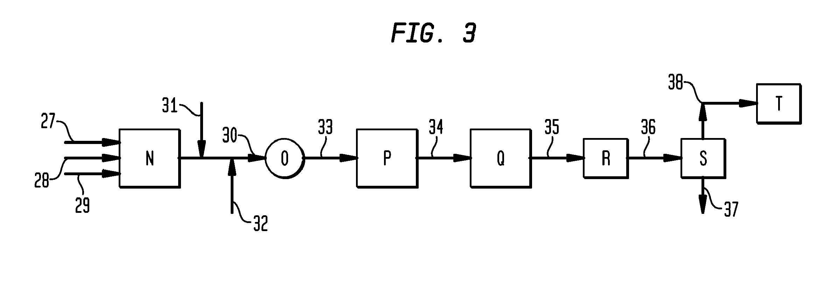

Referring now to Figure 2, oxygen, natural gas, and steam enter, respectively, through lines 15, 16, and 17 into the first stage reactorwhich is now indicated by the reference G. The product gas stream from the first stage reactor G exits through line 18 where both water and steam flow into line 18 through lines 19 and 20, respectively, prior to the gas stream entering the second stage reactorwhich is now indicated by the reference H. The product gas stream which consists primarily of hydrogen, carbon monoxide, and carbon dioxide, exits the second stage reactor H through line 21 and flows through a heat exchanger or cooling unit I. The now cooled product gas stream exits the heat exchanger I through line 22 to enter a low temperature shift reactor J. The low temperature shift reactor J drives the remaining hydrocarbon and carbon monoxide into producing further hydrogen. The resulting gas mixture exits through line 23, is compressed in a syngas compressor K. The product gas stream exits the compressor K through line 24 and flows into a gas separation unit L, which can be a pressure swing adsorption unit or a membrane unit for separating hydrogen from the product gas stream. The hydrogen exits through line 26 and passes to storage vessel M. Residual gas in the form of a tail gas fuel exits through line 25.

Referring now to Figure 3, oxygen, natural gas, and steam will enter through lines 27, 28, and 29, respectively, into the first stage reactor which is now indicated by the reference N. The product stream from the first stage reactor N exits through line 30. Water and steam are directed into the line 30 through lines 31 and 32 and mix with the product stream from the first stage reactor N. A heat exchanger or cooling unit O receives the resulting gas stream and the now cooled gas stream is directed through line 33 into the second stage reactorwhich is now indicated by the reference P. The product stream, which now consists primarily of hydrogen and carbon monoxide and some carbon dioxide, is directed through line 35 to a syngas compressor R in which it is compressed. The compressed gas stream exits through line 36 to a gas separation system which can be a pressure swing adsorption unit or a membrane system S for separation of hydrogen therefrom. Tail gas exits from the system S through line 37 and the hydrogen product can be recovered through line 38 and stored in a storage vessel T.

While this invention has been described with respect to particular embodiments thereof, it is apparent that numerous other forms and modifications of this invention will be obvious to those skilled in the art. The appended claims and this invention generally should be construed to cover all such obvious forms and modifications which are within the true scope of the present invention.

## Claims

1. A method for the partial oxidation of hydrocarbons to produce hydrogen and carbon monoxide by contacting with a mixture of a hydrocarbon-containing feed gas and an oxygen-containing gas a two stage reactor comprising a first stage reactor which comprises a first upstream catalytic layer of a catalytically active metal dispersed on a first inert carrier support and a second downstream catalytic layer of a reduced metal catalyst consisting essentially of a transition metal supported on or in a stable inorganic metal oxide washcoat on a second support, and a second stage reactor comprising a shift reactor.

2. A method as claimed in claim 1, wherein said catalytically active metal is selected from the group consisting of nickel, cobalt, iron, platinum, palladium, iridium, rhenium, ruthenium, rhodium, osmium and combinations thereof.

3. A method as claimed in claim 1 or claim 2, wherein said catalytically active metal is deposited on said first inert carrier support in an amount ranging from about 0.1 % to about 8.0% by weight.

4. A method as claimed in any one of the preceding claims, wherein said first inert carrier support has a shape selected from the group consisting of honeycomb, sphere, pellet, ring, wagonwheel, saddles, and granule.

5. A method as claimed in any one of the preceding claims, wherein said second support is selected from the group consisting of a ceramic foam monolith, a honeycomb monolith, and a metal monolith.

6. A method as claimed in any one of the preceding claims, wherein said second support is partially stabilized zirconia monolith support and the said washcoat is of ceria.

7. A method as claimed in any one of the preceding claims, wherein said transition metal of the second layer is selected from the group consisting of nickel, cobalt, iron, platinum, palladium, iridium, rhenium, ruthenium, rhodium, osmium, and combinations thereof.

8. A method as claimed in any one of the preceding claims, wherein said transition metal of the second layer is about 2 to about 4 percent by weight of said second support.

9. A method as claimed in any one of the preceding claims, wherein said stable inorganic metal oxide is selected from oxides having one or more cations selected from groups IA, IIA, IIIA and IVA of the Periodic Table of the Elements, from the transition metals and from mixtures of these.

10. A method as claimed in any one of the preceding claims, wherein said stable inorganic metal oxide is about 5 to about 30 percent by weight of said second support.

11. A method as claimed in any one of the preceding claims, wherein said second stage reactor employs a catalytic monolith to catalyse the shift reaction.

12. A method as claimed in any one of the preceding claims, further comprising cooling by heat exchange the gas mixture intermediate said first stage reactor and said second stage reactor.

13. A method as claimed in any one of the preceding claims, further comprising cooling by heat exchange the gas mixture downstream of second stage reactor.

14. An apparatus for the partial oxidation of hydrocarbons to produce hydrogen and carbon monoxide by contacting with a mixture of a hydrocarbon-containing feed gas and an oxygen-containing gas comprising a first stage reactor which comprises a first upstream catalytic layer of a catalytically active metal dispersed on a first inert carrier support and a second downstream catalytic layer of a reduced metal catalyst consisting essentially of a transition metal support on or in a stable inorganic metal oxide washcoat on a second support, and a second stage reactor comprising a shift reactor.
